# EUROPEAN PATENT APPLICATION

(11) **EP 4 707 689 A1**
(43) Date of publication of application: **11.03.2026**
(21) Application number: 24800084.6
(22) Date of filing: 24.04.2024
(51) Int. Cl.: F24F 11/58, F24F 11/49, F24F 11/61, F24F 11/63

(54) **COMMUNICATION DEVICE AND AIR CONDITIONING SYSTEM**

(30) Priority: 01.05.2023 JP 2023075535
(71) Applicant: Panasonic Intellectual Property Management Co., Ltd., Kadoma-shi, Osaka 571-0057 (JP)
(72) Inventor: KOBATA, Masaki, Kadoma-shi, Osaka 571-0057 (JP); KUSAKABE, Tomoaki, Kadoma-shi, Osaka 571-0057 (JP); FUKUDA, Osamu, Kadoma-shi, Osaka 571-0057 (JP)
(74) Representative: Eisenführ Speiser
(86) International application number: PCT/JP2024/016118
(87) International publication number: WO 2024/228353

(57) **Abstract**

The present disclosure provides a communication device and an air conditioning system that make it possible to update firmware at an appropriate timing. A WLAN adapter 1 according to the present disclosure includes a firmware existence determination section 112, a postponement time determination section 113, and a postponement time decision section 114. The firmware existence determination section 112 determines whether the latest firmware for the WLAN adapter 1 exists. The postponement time determination section 113 determines whether postponement of a firmware update is needed, based on a setting on a timer function that controls an air conditioning apparatus 2 in accordance with a predetermined schedule. When it is determined that postponement of the firmware update is needed, the postponement time decision section 114 decides on, from among a plurality of candidates, a postponement time that sets how long the firmware update is postponed.

## Description

### [Technical Field]

The present disclosure relates to a communication device and an air conditioning system.

### [Background Art]

Patent Literature 1 discloses a configuration in which a communication adapter is connected to an air conditioner, and the air conditioner is remotely operated.

### [Citation List]

### [Patent Literature]

[Patent Literature 1]
Japanese Patent Laid-Open No. 2021-085599

### [Summary of Invention]

### [Technical Problem]

The present disclosure provides a communication device and an air conditioning system that make it possible to update firmware at an appropriate timing.

### [Solution to Problem]

A communication device according to the present disclosure is connected to an indoor unit of an air conditioning apparatus including an outdoor unit and the indoor unit, is configured to be capable of communicating, via a communication network, with a management device that manages the outdoor unit and the indoor unit, and includes a first determination section, a second determination section, and a decision section. The first determination section determines whether latest firmware for the communication device exists. When it is determined that the latest firmware exists, the second determination section determines whether postponement of a firmware update is needed, based on a setting on a timer function that controls the air conditioning apparatus in accordance with a predetermined schedule. When it is determined that postponement of the firmware update is needed, the decision section decides on, from among a plurality of candidates, a postponement time that sets how long the firmware update is postponed.

Note that the disclosure of Japanese Patent Application No. 2023-075535, filed on May 1, 2023, is incorporated in the present description in its entirety.

An air conditioning system according to the present disclosure includes a communication device, an air conditioning apparatus, and a management device. The communication device is the above-mentioned communication device according to the present disclosure. The air conditioning apparatus includes: an indoor unit connected to the communication device; an outdoor unit connected to the indoor unit; and an operating device that operates the indoor unit. The management device is connected to the communication device via the communication network, and manages the outdoor unit and the indoor unit.

### [Advantageous Effects of Invention]

The communication device and the air conditioning system according to the present disclosure can postpone a timing of updating firmware as necessary. Accordingly, the firmware can be updated at an appropriate timing.

### [Brief Description of Drawings]

[Figure 1] Figure 1 is a block diagram of a communication device and an air conditioning system according to an embodiment 1.
[Figure 2] Figure 2 is a flowchart for describing a firmware updating process by the communication device according to the embodiment 1.

### [Description of Embodiments]

### (Knowledge and the like underlying the present disclosure)

When the present inventors conceived the present disclosure, there had been a technology by which an air conditioning apparatus is remotely operated through a communication device connected to the air conditioning apparatus.

However, the communication device requires a firmware update in some cases. The present inventors found the problem that when a timing of running a timer function that controls the air conditioning apparatus in accordance with a predetermined schedule comes during a firmware update, the communication device cannot control the air conditioning apparatus on the basis of the timer function. To solve the problem, the present inventors has formed the subject of the present disclosure.

Accordingly, the present disclosure provides a communication device and an air conditioning system that postpone a timing of updating firmware when the timing of updating the firmware collides (that is, coincides) with a timing of running a timer function.

Hereinafter, embodiments will be described in detail with reference to the drawings. However, an unduly detailed description is omitted in some cases. For example, a detailed description of an already well-known matter, or a duplicated description of the substantially same configuration is omitted in some cases. This is to avoid making the following description unduly redundant, and to facilitate the understanding of a person with an ordinary skill in the art.

Note that the accompanying drawings and the following description are provided for the purpose of allowing a person with an ordinary skill in the art to sufficiently understand the present disclosure, and are not intended to limit the subject matters according to claims.

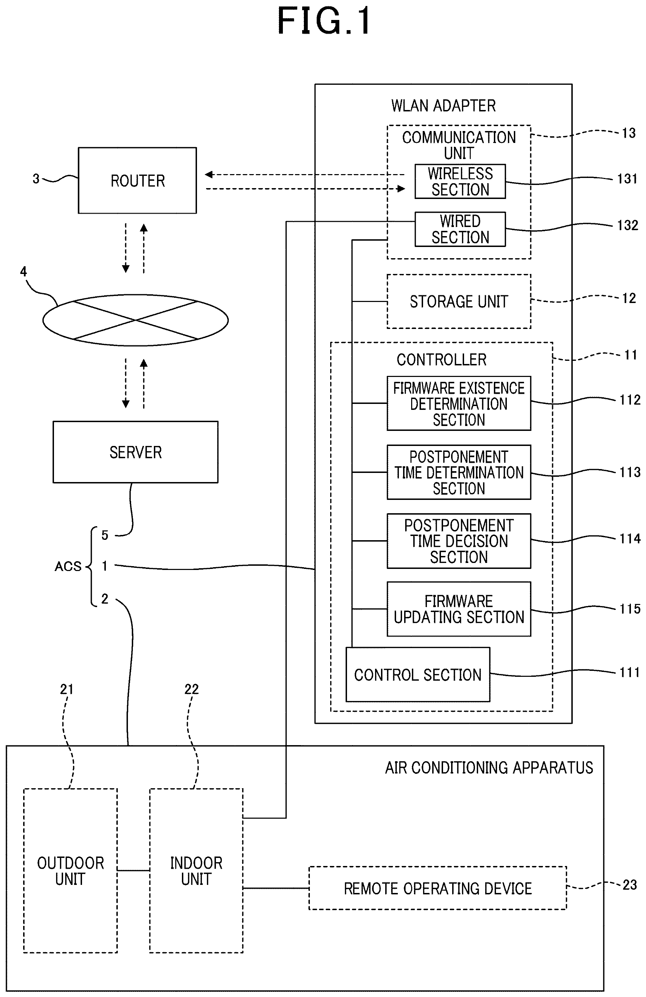

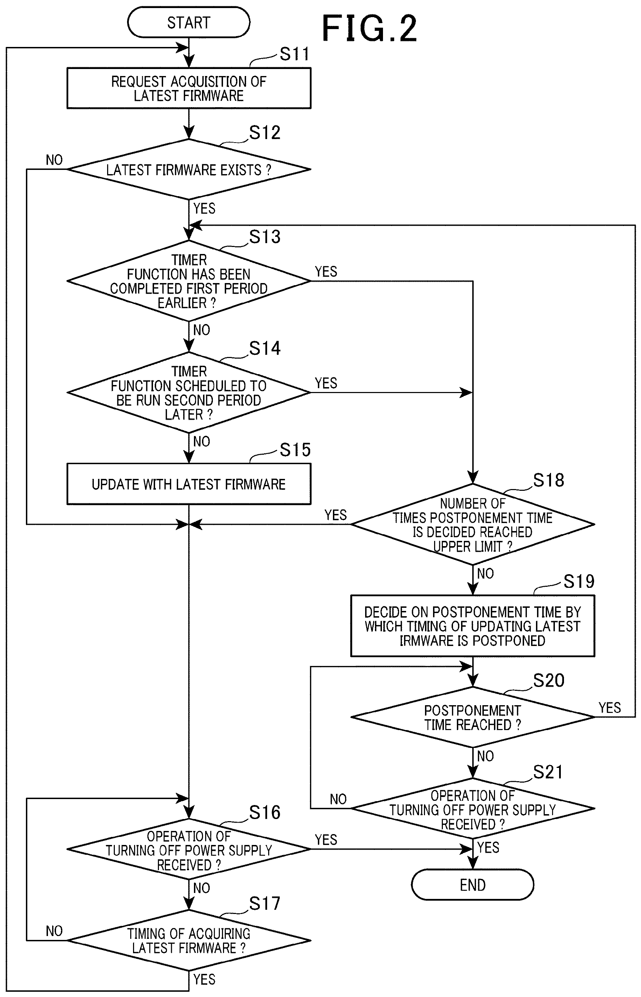

Hereinafter, an embodiment 1 will be described with reference to Figures 1 and 2.

### [1-1. Configuration]

### [1-1-1. Configuration of air conditioning system]

In Figure 1, an air conditioning system ACS according to the present embodiment includes a wireless local area network adapter (an example of a communication device) 1 according to the present embodiment, an air conditioning apparatus 2, and a server (an example of a management device) 5. Hereinafter, "wireless local area network" is abbreviated to "WLAN (Wireless Local Area Network)". Details of the air conditioning apparatus 2 and the WLAN adapter 1 will be described later.

The server 5 is connected to the WLAN adapter 1 via a communication network 4, and manages an outdoor unit 21 and an indoor unit 22. The server 5 is connected to the communication network 4. The communication network 4 is, for example, the Internet. A router 3 is connected to the communication network 4. The WLAN adapter 1 is connected to the router 3 wirelessly, for example, through Wi-Fi(R) or the like, but may be connected to the router 3 by wire. The WLAN adapter 1 is connected to the communication network 4 via the router 3. Thus, the server 5 is connected to the WLAN adapter 1 via the communication network 4 and the router 3.

The server 5 acquires, from the air conditioning apparatus 2 via the communication network 4 and the WLAN adapter 1, operation data including the behaving states and the like of the outdoor unit 21 and the indoor unit 22 included in the air conditioning apparatus 2, and manages the outdoor unit 21 and the indoor unit 22 by using the operation data. For example, the server 5 determines, based on the operation data, whether refrigerant leaks in at least one of the outdoor unit 21 and the indoor unit 22. Moreover, the server 5 keeps firmware for updating software for controlling the WLAN adapter 1. The server 5 transmits the kept firmware that is the latest to the WLAN adapter 1 in response to a request for acquisition of the latest firmware from the WLAN adapter 1.

### [1-1-2. Configuration of air conditioning apparatus]

As shown in Figure 1, the air conditioning apparatus 2 includes the indoor unit 22 connected to the WLAN adapter 1, the outdoor unit 21 connected to the indoor unit 22, and a remote operating device (an example of an operating device) 23 that operates the indoor unit 22.

The indoor unit 22 is configured to take in air inside a room in which the indoor unit 22 is installed, perform heat exchange between the taken-in air and the refrigerant circulating between the indoor unit 22 and the outdoor unit 21, and blow out air after the heat exchange into the room.

The outdoor unit 21 is configured to behave based on detection values from an outside temperature sensor provided to the outdoor unit 21 and from a refrigerant pressure sensor (both of which are not shown), as well as based on an operation control signal sent from the indoor unit 22, perform heat exchange between outside air and the refrigerant circulating between the outdoor unit 21 and the indoor unit 22, and send out the refrigerant after the heat exchange to the indoor unit 22.

The remote operating device 23 has, as an input interface, for example, an operating panel (not shown) that can be operated by a user of the air conditioning apparatus 2, and is installed on a wall or the like in the room. The remote operating device 23 is connected to the indoor unit 22, for example, through a cable. The user can cause the indoor unit 22 to behave by operating the operating panel of the remote operating device 23. The user can set various actions to be performed by the indoor unit 22 by operating the operating panel of the remote operating device 23. An example of the various actions to be performed by the indoor unit 22 is an action prompted by a timer function that controls the air conditioning apparatus 2 (for example, the indoor unit 22) in accordance with a predetermined schedule. Examples of the timer function include, for example, a weekly timer that sets a schedule of air conditioning operations for one week, and a time period demand that reduces the amount of operation of the indoor unit 22 during a specified time period. The remote operating device 23 transmits setting information set by the user to the WLAN adapter 1 via the indoor unit 22.

Moreover, the remote operating device 23 may include, as output interfaces, for example, a speaker and a display device. For the display device, the remote operating device 23 can use, for example, a segment display device, a liquid crystal display device, an organic electroluminescence display device, or the like. With such output interfaces, the remote operating device 23 can perform notification of behaving status through voice, notification of behaving status and a room temperature through a display, and the like.

The WLAN adapter 1 is attached to a wall or a ceiling in the room, above the ceiling, or to a cabinet of the indoor unit 22 or the like. When the indoor unit 22 has a structure that is installed by being inset into a ceiling, the WLAN adapter 1 may be attached to a base portion, of the cabinet of the indoor unit 22, that is disposed above the ceiling. In the present embodiment, the WLAN adapter 1 is connected to the indoor unit 22, for example, through a cable. However, the WLAN adapter 1 may be connected to a communication line that connects the outdoor unit 21 and the indoor unit 22. As described above, the WLAN adapter 1 is not built in the indoor unit 22, and has a form independent of the indoor unit 22. The WLAN adapter 1 is connected to the indoor unit 22 in a retrofitted manner when the indoor unit 22 is installed in a place of installation, or after the indoor unit 22 is installed in the place of installation. For example, the WLAN adapter 1 is configured to collect and transmit to the server 5 operation data from at least one of the outdoor unit 21 and the indoor unit 22. For example, the WLAN adapter 1 is configured to control the indoor unit 22, based on setting information stored, or control information transmitted from the server 5. For example, the WLAN adapter 1 is configured not to cause the indoor unit 22 that is behaving by being controlled by the remote operating device 23 to perform another action except in specific cases such as in an emergency. For example, the WLAN adapter 1 is configured to be unable to acquire operation data on the indoor unit 22 and the outdoor unit 21 during execution of a firmware update (details of which will be described later).

### [1-1-3. Configuration of communication device]

A specific configuration of the WLAN adapter 1, which corresponds to an example of the communication device according to the present embodiment, will be described. The WLAN adapter 1 is connected to the indoor unit 22 of the air conditioning apparatus 2 including the outdoor unit 21 and the indoor unit 22, and is configured to be capable of communicating, via the communication network 4, with the server 5 that manages the outdoor unit 21 and the indoor unit 22. The WLAN adapter 1 is not included in the air conditioning apparatus 2, and is provided by being externally attached to the air conditioning apparatus 2.

As shown in Figure 1, the WLAN adapter 1 includes a controller 11, a storage unit 12, and a communication unit 13. The controller 11 and the storage unit 12 are provided to the WLAN adapter 1 independently of each other, but may be configured by using an integrated circuit (IT) formed as a single unit.

For the controller 11, for example, a processor may be used. When a processor is used for the controller 11, various processes can be executed by causing the processor to read a program from the storage unit 12 (details of which will be described later) storing the program, and causing the processor to execute the program. Accordingly, since processes can be changed by changing the program stored in the storage unit 12, the degree of flexibility in changing the content of control can be increased. The controller 11 as a processor is configured by using, for example, a central processing unit (Central Processing Unit: CPU), a microcontroller (Micro Controller Unit: MCU), a microprocessor (Micro Processor Unit: MPU), or the like.

By reading and executing a program for control of the WLAN adapter 1 stored in the storage unit 12, the controller 11 functions as, for example, a control section 111, a firmware existence determination section 112, a postponement time determination section 113, a postponement time decision section 114, and a firmware updating section 115, as well as other functional blocks (not shown). For example, the program for control may be downloaded from the server 5 and stored in the storage unit 12, or may be read from a recording medium (magnetic disk, optical disk, flash memory, or the like) and stored in the storage unit 12.

The control section 111 controls the WLAN adapter 1 in such a manner that firmware is not updated at a timing of running a timer function, by controlling the firmware existence determination section 112, the postponement time determination section 113, the postponement time decision section 114, and the firmware updating section 115 in a supervising manner, which will be described in detail later.

The firmware existence determination section (an example of a first determination section) 112 determines whether the latest firmware for the WLAN adapter 1 exists. In the present embodiment, the firmware existence determination section 112 determines whether the latest firmware exists in the server 5 connected via the communication network 4. The firmware existence determination section 112 stores the latest firmware acquired from the server 5 in the storage unit 12. When it is determined that the latest firmware exists, the postponement time determination section (an example of a second determination section) 113 determines whether postponement of a firmware update is needed, based on a setting on a timer function that controls the air conditioning apparatus 2 in accordance with a predetermined schedule. With the timer function, the WLAN adapter 1 transmits a control signal to the indoor unit 22 in accordance with the predetermined schedule, whereby the air conditioning apparatus 2 is controlled based on the timer function. When it is determined that postponement of the firmware update is needed, the postponement time decision section (an example of a decision section) 114 decides on, from among a plurality of candidates, a postponement time that sets how long the firmware update is postponed. When it is determined that postponement of the firmware update is not needed, the firmware updating section 115 updates the firmware. For example, the firmware updating section 115 updates the firmware immediately. Further, the firmware updating section 115 updates the firmware when the postponement time decided by the postponement time decision section 114 is reached.

The communication unit 13 includes a wireless section 131 and a wired section 132. The wireless section 131 is configured to be capable of wireless communication with the router 3 through a wireless LAN connection, for example, by using IEEE 802.16-based Wi-Fi (WiFi(R)), IEEE 802.16-based WiMax (WiMax(R)), or the like. The wireless section 131 is configured to receive firmware and other information transmitted from the server 5 via the communication network 4 and the router 3. The wireless section 131 is configured to transmit operation data, leak detection data, and the like collected by the WLAN adapter 1 to the router 3.

The wired section 132 is connected to, for example, the indoor unit 22 by wire. For a wired-connection communicator, for example, there is a wired LAN based on the Ethernet(R) standards, a wired connection using a fiber optic cable, or the like. The wired section 132 is configured to receive operation data transmitted from at least one of the outdoor unit 21 and the indoor unit 22, and setting information set by using the remote operating device 23. The wired section 132 is configured to transmit, to the indoor unit 22, a control signal for causing the indoor unit 22 to behave based on the setting information.

The storage unit 12 is a rewritable non-volatile storage device, and stores a program to be executed by the controller 11, operation data from at least one of the outdoor unit 21 and the indoor unit 22, setting information set by using the remote operating device 23, and the like. The storage unit 12 is configured by using, for example, a semiconductor storage device, such as a flash ROM (Read Only Memory) or an SSD (Solid State Disk), or a magnetic storage device. The storage unit 12 may include a RAM (Random Access Memory) that forms a work area for temporarily storing a program and data.

The storage unit 12 stores a program to be executed by the control section 111, operation data and setting information received by the communication unit 13, and the like. Moreover, the storage unit 12 stores firmware transmitted from the server 5 and a postponement time decided by the postponement time decision section 114.

### [1-2. Action]

Among various actions performed by the WLAN adapter 1, the air conditioning apparatus 2, and the air conditioning system ACS configured as described above, actions in a firmware updating process that is executed by the WLAN adapter 1 in described.

The actions in the firmware updating process that is executed by the WLAN adapter 1 will be described based on Figure 2, with reference to Figure 1. Figure 2 is a flowchart showing an example of a flow of the actions in the firmware updating process that is executed by the WLAN adapter 1 (see Figure 1).

When a power supply is turned on, the WLAN adapter 1 starts the actions shown in Figure 2. In the WLAN adapter 1, the control section 111 included in the controller 11 controls the firmware existence determination section 112, the postponement time determination section 113, the postponement time decision section 114, and the firmware updating section 115 (see Figure 1 for any thereof), whereby the firmware updating process shown in Figure 2 is executed.

As shown in Figure 2, when the WLAN adapter 1 starts the actions, in step S11, the firmware existence determination section 112 sends a request for acquisition of the latest firmware to the server 5 (see Figure 1) via the wireless section 131 provided to the communication unit 13, the router 3, and the communication network 4 (see Figure 1 for any thereof), and the process moves to step S12. The WLAN adapter 1 sends a request for acquisition of the latest firmware to the server 5 at least each of when the power supply to the WLAN adapter 1 is turned on and an initial connection is made to the communication network 4 via the router 3 (see Figure 1), and when a process of resetting the WLAN adapter 1 is executed.

In step S12, the firmware existence determination section 112 checks whether the latest firmware exists in a signal transmitted from the server 5 in response to the request for acquisition in step S11. When the firmware existence determination section 112 determines that the latest firmware exists in the signal (step S12: YES), the process moves to step S13. When the firmware existence determination section 112 determines that the latest firmware does not exist in the signal (step S12: NO), the process moves to step S16.

In step S13, the postponement time determination section 113 checks whether a timer function has been completed on the air conditioning apparatus 2 (for example, the indoor unit 22 (see Figure 1)) a first period before the current point of time. The first period is set to a longer period than a period required to retransmit, to the indoor unit 22 that has failed to behave based on the timer function, a control signal for causing the indoor unit 22 to behave based on the timer function, which will be described in detail later. In the present embodiment, the first period is set to, for example, one minute. The postponement time determination section 113 confirms all times of day at which all timer functions stored in the storage unit 12 are to be run. When the postponement time determination section 113 confirms that the timer function has been completed on the indoor unit 22 the first period before the current point of time (step S13: YES), the postponement time determination section 113 determines that postponement of a firmware update is needed, and the process moves to step S18. When the postponement time determination section 113 confirms that the timer function was not run on the indoor unit 22 the first period before the current point of time (step S13: NO), the postponement time determination section 113 determines that postponement of the firmware update is not needed, and the process moves to step S14.

Here, in an action from when a timer function is started until the timer function is finished, a time of day at which the timer function is started, or a time of day at which the timer function is finished, corresponds to an example of a timing of running the timer function. Accordingly, in step S13, the postponement time determination section 113 determines whether a time of day at which the timer function is started or a time of day at which the timer function is finished came the first period before the current point of time. For the timer function, for example, it is assumed that a weekly timer as follows is set: "cooling of the room at a set temperature of 28° is started at 09:00 on a predetermined day of week, and the cooling is stopped at 20:00." In such a case, timings of running the timer function are 09:00 and 20:00. Moreover, for the timer function, for example, it is assumed that a time period demand as follows is set: "the amount of operation of the indoor unit 22 is reduced from 11:00 until 13:00 and from 16:00 until 19:00 in a day." In such a case, timings of running the timer function are 11:00, 13:00, 16:00, and 19:00.

When a control signal for starting cooling the room is transmitted from the WLAN adapter 1 to the indoor unit 22, based on a timer function stored in the storage unit 12 (see Figure 1), there is a possibility that an error signal indicating that cooling cannot be started is transmitted from the indoor unit 2 to the WLAN adapter 1. In such a case, to cause the indoor unit 22 to start a cooling action, the WLAN adapter 1 needs to retransmit, to the indoor unit 22, a control signal for controlling the start of cooling of the room. Accordingly, the WLAN adapter 1 sets the first period to a longer period than a period for the retransmission to secure such a period.

In step S14, the postponement time determination section 113 checks whether a timer function is scheduled to be run on the indoor unit 22 a second period after the current point of time. The second period is set to a longer period than a period required for the firmware updating process, which will be described in detail later. In the present embodiment, the second period is set to, for example, after five minutes. The postponement time determination section 113 confirms all times of day at which all timer functions stored in the storage unit 12 are to be run. In step S14, when a time of day at which the timer function is started, or a time of day at which the timer function is finished, comes the second period after the current point of time, the postponement time determination section 113 determines that postponement of the firmware update is needed. When the postponement time determination section 113 confirms that the timer function is scheduled to be run the second period after the current point of time, for example, on the indoor unit 22 of the air conditioning apparatus 2 (step S14: YES), the postponement time determination section 113 determines that postponement of the firmware update is needed, and the process moves to step S18. When the postponement time determination section 113 confirms that the timer function is not scheduled to be run on the indoor unit 22 the second period after the current point of time (step S14: NO), the postponement time determination section 113 determines that postponement of the firmware update is not needed, and the process moves to step S15.

For the firmware updating process in the WLAN adapter 1, for example, a period of several minutes is required. During the firmware updating process, the LAN adapter 1 cannot cause the indoor unit 22 to behave based on a timer function. Accordingly, the WLAN adapter 1 sets the second period to a longer period than the period required for the firmware updating process so that a timing of running the timer function as described in step S13 does not come during the firmware updating process.

In step S15, the firmware updating section 115 updates firmware with the latest firmware acquired in step S12, and the firmware for the WLAN adapter 1 is thus updated. When the firmware updating section 115 finishes the firmware update, the process moves to step S16.

In step S16, the control section 111 determines whether an operation is received to bring the power supply for causing the WLAN adapter 1 to behave into an off state. The operation to bring the power supply into the off state is performed, for example, by a user of the air conditioning apparatus 2. When the control section 111 determines that the operation is received (step S16: YES), the control section 111 executes processing for bringing the power supply for the WLAN adapter 1 into the off state, and the action of the WLAN adapter 1 is thus ceased. When the control section 111 determines that the operation is not received (step S16: NO), the process moves to step S17.

In step S17, the firmware existence determination section 112 determines whether it is a timing of acquiring the latest firmware. For example, a timing (that is, a time of day) that the latest firmware is acquired once a day at a predetermined time of day is stored in the storage unit 12. When the firmware existence determination section 112 determines that it is a timing of acquiring the latest firmware (step S17: YES), the process moves to step S11. When the firmware existence determination section 112 determines that it is not a timing of acquiring the latest firmware (step S17: NO), the process moves to step S16. As described above, the WLAN adapter 1 is configured to attempt to acquire the latest firmware when a timing of acquiring the latest firmware comes, in addition to when the power supply is turned on. Moreover, by executing the processes in steps S16 and S17 repeatedly, the WLAN adapter 1 ceases the action without acquiring firmware when the power supply falls into the off state, even if a timing of acquiring the firmware does not come.

In step S18, the postponement time decision section 114 determines whether the number of times a postponement time by which the firmware update is postponed is decided reaches an upper limit. When the postponement time decision section 114 determines that the number of times a postponement time is decided reaches the upper limit (step S18: YES), the process moves to step S16. When the postponement time decision section 114 determines that the number of times a postponement time is decided does not reach the upper limit (step S18: NO), the process moves to step S19.

In step S19, the postponement time decision section 114 decides on a postponement time by which the latest firmware update is postponed, and the process moves to step S20. As described above, in the present embodiment, a timing at which the process in step S11 is executed is stored in the storage unit 12. In other words, in the present embodiment, the firmware existence determination section 112 determines, at predetermined intervals, whether the latest firmware exists. The postponement time decision section 114 decides on such a postponement time that is shorter than an interval of the predetermined intervals. When the postponement time is decided, the postponement time decision section 114 starts counting to the postponement time.

For example, the postponement time decision section 114 decides on a postponement time at random in such a manner that the postponement time is a period within the range of a half period of an interval of the predetermined intervals. When the predetermined interval is one day, the postponement time decision section 114 decides on, for example, a random time period by the hour within the range of one hour to 12 hours, as a postponement time. For example, the postponement time decision section 114 decides on a postponement time at random from among a plurality of candidates. For example, the postponement time decision section 114 decides on a postponement time at random by using a random number for deciding on a postponement time. For a method of setting a postponement time, it is also conceivable that all timings of running of all timer functions stored in the storage unit 12 are retrieved, and a period is set that does not coincide with all the retrieved timings of running. However, with such a setting method, the load of processing for retrieving the timings of running increases. Accordingly, in the present embodiment, the WLAN adapter 1 decides on a postponement time at random by using the postponement time decision section 114, without retrieving a timing of running a timer function, whereby the load of processing for deciding on a postponement time can be reduced.

It is likely that a timing of running a timer function is set regularly in a predetermined period (for example, one day). Accordingly, if such a postponement time is decided that is the same period as an interval of the predetermined intervals at which the firmware existence determination section 112 attempts to acquire firmware from the server 5, there is a possibility that a timing of updating firmware for the WLAN adapter 1 after the postponement time passes will collide (that is, coincide) with a timing of running the timer function again. In other words, there is a possibility that an affirmative determination (a determination of YES) is made in the process in any one of steps S13 and S14. Accordingly, each of the plurality of candidates for a postponement time is set to a shorter period than an interval of the predetermined intervals. For example, when an interval of the predetermined intervals at which it is attempted to acquire firmware is 24 hours, 12 periods in total ranging from one hour to 12 hours by the hour are set as candidates for a postponement time. Accordingly, the postponement time decision section 114 can decide on such a postponement time that is shorter than an interval of the predetermined intervals at which the firmware existence determination section 112 attempts to acquire firmware from the server 5. Thus, the WLAN adapter 1 can prevent a timing of updating firmware for the WLAN adapter 1 after the postponement time passes from colliding with a timing of running the timer function again.

There are some cases where the postponement time decision section 114 decides on a postponement time a plurality of times, which will be described in detail later. When deciding on a postponement time for the second or later time, the postponement time decision section 114 decides on such a postponement time that is shorter than a period obtained by subtracting a total period of the hitherto decided postponement times from an interval of the predetermined intervals at which it is attempted to acquire firmware. For example, when a total of the hitherto decided postponement times is 15 hours, the postponement time decision section 114 decides on any one period of one hour to eight hours, among candidates for a postponement time, as a postponement time such that the postponement time is shorter than nine hours obtained by subtracting 15 hours from 24 hours that is an interval of the predetermined intervals. Thus, the WLAN adapter 1 can prevent all postponement times decided by the postponement time decision section 114 from being longer than an interval of the predetermined intervals at which it is attempted to acquire firmware.

In step S20, the postponement time decision section 114 determines whether the postponement time decided in step S19 is reached. When the postponement time decision section 114 determines that the postponement time is reached (step S20: YES), the process moves to step S13. When the postponement time decision section 114 determines that the postponement time is not reached (step S20: NO), the process moves to step S21.

In step S21, through processing similar to step S16, the control section 111 determines whether an operation is received to bring the power supply for causing the WLAN adapter 1 to behave into the off state. The operation to bring the power supply into the off state is performed, for example, by a user of the air conditioning apparatus 2. When the control section 111 determines that the operation is received (step S21: YES), the control section 111 executes processing for bringing the power supply for the WLAN adapter 1 into the off state, and the action of the WLAN adapter 1 is thus ceased. When the control section 111 determines that the operation is not received (step S21: NO), the process returns to step S20. As described above, the WLAN adapter 1 ceases the action without updating the firmware when the operation to bring the power supply into the off state is received, even if the postponement time is not reached.

In the present embodiment, when it is determined that the number of times a postponement time is decided reaches the upper limit (for example, three times) (step S18: YES), in order for the process of updating with the latest firmware (step S15) to be executed thereafter, it is necessary, at least in the process in step S12, for the firmware existence determination section 112 to determine that the latest firmware exists in the server 5 (step S12: YES). Accordingly, in the present embodiment, when the number of times the postponement time decision section 114 decides on a postponement time reaches the upper limit (an example of a predetermined number of times) (step S18: YES), the firmware is not updated until the firmware existence determination section 112 determines for the next time that the latest firmware exists (the flow of step S16: NO after step S18 → step S17: YES → step S11 → step S12: NO → step S16). In other words, when the number of times a postponement time is decided reaches the upper limit, the WLAN adapter 1 suspends the firmware updating process for a time. By imposing the upper limit to the number of times a postponement time is decided, the WLAN adapter 1 is prevented from executing the firmware updating process endlessly in an interval of the predetermined intervals to acquire the latest firmware, so that a reduction in the processing load of the firmware updating process is achieved.

After the latest firmware is acquired in step S12, it is assumed that it is determined that the number of times a postponement time is decided reaches the upper limit (step S18: YES), and in the process in step S12 executed thereafter, the firmware existence determination section 112 acquires firmware. Even if the two pieces of firmware acquired with the process in step S18 in between are the same, the WLAN adapter 1 treats the firmware acquired after the step S18 as the latest firmware when an update is not performed with the firmware acquired before the step S18.

In the present embodiment, when the postponement time is reached, the postponement time determination section 113 determines again whether postponement of the firmware update is needed. Specifically, when the postponement time decided by the postponement time decision section 114 is reached (step S20: YES) after the postponement time determination section 113 determines whether postponement of the firmware update is needed (after step S13 or S14), the postponement time determination section 113 determines again whether postponement of the firmware update is needed (the flow of step S20, then step S13 and step S14). Thus, the WLAN adapter 1 can prevent a timing of updating the firmware from colliding with a timing of running a timer function also when a postponement time is reached.

In the present embodiment, the postponement time decision section 114 decides on a postponement time again when the postponement time determination section 113 determines again that postponement of the firmware update is needed. Specifically, after the postponement time determination section 113 determines again that postponement of the firmware update is needed (the flow of step S20: YES → step S13: YES, or the flow of step S20: YES → step S13: NO → step S14: YES), the postponement time decision section 114 decides on a postponement time again (the flow of step S13 or S14 → step S18: NO → step S19). Thus, since the WLAN adapter 1 can repeat deciding on a postponement time until the number of times a postponement time is decided reaches the upper limit, an occasion for a firmware update can be set repeatedly.

### [1-3. Effects and the like]

As described above, in the present embodiment, the WLAN adapter 1 is connected to the indoor unit 22 of the air conditioning apparatus 2 including the outdoor unit 21 and the indoor unit 22, and is configured to be capable of communicating, via the communication network 4, with the server 5 that manages the outdoor unit 21 and the indoor unit 22. The WLAN adapter 1 includes the firmware existence determination section 112, the postponement time determination section 113, and the postponement time decision section 114. The firmware existence determination section 112 determines whether the latest firmware for the WLAN adapter 1 exists. When it is determined that the latest firmware exists, the postponement time determination section 113 determines, based on a setting on a timer function that controls the air conditioning apparatus 2 in accordance with a predetermined schedule, whether postponement of a firmware update is needed. When it is determined that postponement of the firmware update is needed, the postponement time decision section 114 decides on, from among a plurality of candidates, a postponement time that set how long the firmware update is postponed.

Thus, the WLAN adapter 1 can postpone a timing of updating firmware as necessary. Accordingly, the WLAN adapter 1 can update the firmware at an appropriate timing. Moreover, the WLAN adapter 1 can prioritize running a timer function while preventing a timing of running the timer function from colliding with the timing of updating the firmware.

As in the present embodiment, the WLAN adapter 1 includes the firmware updating section 115. The firmware updating section 115 updates the firmware when it is determined that postponement of the firmware update is not needed.

Thus, the WLAN adapter 1 can determine that postponement of the firmware update is not needed after determining that the latest firmware exists. Accordingly, the WLAN adapter 1 can update the firmware immediately after the latest firmware is acquired.

As in the present embodiment, the postponement time decision section decides on a postponement time at random from among a plurality of candidates.

Thus, the WLAN adapter 1 does not need to retrieve all timings of running of all timer functions stored in the storage unit 12. Accordingly, the WLAN adapter 1 can reduce the load of processing for deciding a postponement time.

As in the present embodiment, the postponement time determination section 113 may determine that postponement of the firmware update is needed when a timer function has been completed a first period before the current point of time, or when a timer function is scheduled to be run a second period after the current point of time.

Thus, a period for an error signal indicting a failure to run the timer function to be transmitted from the indoor unit 22 and a period for the firmware update to be completed before the timer function is started are secured. Accordingly, the WLAN adapter 1 can prevent a series of processes related to a timer function run on the indoor unit 22 from being interrupted by the firmware updating process.

As in the present embodiment, the firmware existence determination section 112 may determine at predetermined intervals whether the latest firmware exists, and the postponement time decision section 114 may decide on such a postponement time that is shorter than an interval of the predetermined intervals.

Thus, the postponement time decision section 114 can decide on a postponement time that is within a period from when the firmware existence determination section 112 determines that the latest firmware exists until the firmware existence determination section 112 determines for the next time that the latest firmware exists. Accordingly, the WLAN adapter 1 can decide on a postponement time as necessary each time the latest firmware is acquired.

As in the present embodiment, when a postponement time is reached, the postponement time determination section 113 may determine again whether postponement of the firmware update is needed.

Thus, when a postponement time is reached, it can be determined whether the firmware update is needed. Accordingly, the WLAN adapter 1 can prevent a timing of running a timer function from colliding with a timing of updating the firmware when the postponement time is reached.

As in the present embodiment, the postponement time decision section 114 may decide on a postponement time again when the postponement time determination section 113 determines again that postponement of the firmware update is needed.

Thus, the postponement time decision section 114 can repeat deciding on a postponement time. Accordingly, the WLAN adapter 1 can attempt to update the firmware update repeatedly until a collision with a timing of running a timer function does not occur.

As in the present embodiment, when the number of times the postponement time decision section 114 decides on a postponement time reaches a predetermined number of times, a firmware update may be configured not to be performed until the firmware existence determination section 112 determines for the next time that the latest firmware exists.

Thus, a postponement time can be prevented from being decided too many times by limiting the number of times the postponement time decision section 114 executes the processing for deciding on a postponement time. Accordingly, the WLAN adapter 1 can reduce the load of processing related to the firmware updating process.

In the present embodiment, the air conditioning system ACS includes the WLAN adapter 1, the air conditioning apparatus 2, and the server 5. The WLAN adapter 1 is an example of the communication device according to the present embodiment. The air conditioning apparatus 2 includes the indoor unit 22 connected to the WLAN adapter 1, the outdoor unit 21 connected to the indoor unit 22, and the remote operating device 23 that operates the indoor unit 22. The server 5 is connected to the WLAN adapter 1 via the communication network 4, and manages the outdoor unit 21 and the indoor unit 22.

Thus, the air conditioning system ACS can obtain operations and effects similar to those of the WLAN adapter 1 according to the present embodiment.

### (Other embodiments)

As described above, the embodiment 1 has been descried as an illustration of the technology disclosed in the present application. However, the technology according to the present disclosure is not limited thereto, and can be applied to embodiments obtained by making a change, a substitution, an addition, an omission, and the like. A new embodiment can also be made by combining the individual constituent elements described in the embodiment 1.

Accordingly, other embodiments are illustrated hereinafter.

Although the WLAN adapter 1 is connected to the communication network 4 via the router 3 in the above-described embodiment, the configuration is not limited thereto. For example, the WLAN adapter 1 may also include the functionality of the router 3, and the WLAN adapter 1 may be configured to be directly connected to the communication network 4. For example, the WLAN adapter 1 may have a SIM (Subscriber Identity Module) card mounted therein, and may be configured to be directly connected to the server 5 via the communication network 4 without via the router 3.

Although the postponement time decision section 114 decides on a postponement time at random in the above-described embodiment, the configuration is not limited thereto. For example, the postponement time decision section 114 may be configured to refer to the most recent timer function and, when a schedule of the timer function is not set after several hours (for example, four hours), decide that a postponement time is a time after the several hours (for example, four hours). In such a case, among a plurality of candidates, the time after the several hours (for example, four hours) may be selected. When there is not a time coinciding with the time after the several hours among the plurality of candidates, a time closest to the time after the several hours may be selected from among the plurality of candidates.

Although the server 5 keeps operation data, which includes behaving states and the like of the outdoor unit 21 and the indoor unit 22 included in the air conditioning apparatus 2, and firmware for updating software for controlling the WLAN adapter 1 in the above-described embodiment, the configuration is not limited thereto. For example, the air conditioning system may include a server that keeps operation data from the outdoor unit and the indoor unit, and a server (that is, a firmware keeping device) that keeps firmware for the WLAN adapter, separately from each other. In such a case, the firmware existence determination section (an example of the first determination section) included in the WLAN adapter determines whether the latest firmware exists in the server (that is, the firmware keeping device) connected via the communication network.

Although the remote operating device 23 is configured to be installed on a wall or the like in the room in the above-described embodiment, the configuration is not limited thereto. The remote operating device 23 may have, for example, a portable structure, and may be configured to be able to bi-directionally communicate with the indoor unit 22 through wireless communication, for example, using infrared or the like.

Although the WLAN adapter 1 has a structure that is externally attached to the air conditioning apparatus 2 in the above-described embodiment, the configuration is not limited thereto. The WLAN adapter may be one of the constituent elements of the air conditioning apparatus. In such a case, the WLAN adapter may be built in, for example, the indoor unit or the outdoor unit.

Note that since the embodiments will be described to illustrate the technologies according to the present disclosure, various changes, substitutions, additions, omissions, and the like can be made in claims or equivalents thereto.

### (Supplement)

Based on the description of the embodiments, following technologies are disclosed.

(Technology 1) A communication device connected to an indoor unit of an air conditioning apparatus including an outdoor unit and the indoor unit, the communication device being configured to be capable of communicating, via a communication network, with a management device that manages the outdoor unit and the indoor unit, the communication device including: a first determination section that determines whether latest firmware for the communication device exists; a second determination section that, when the first determination section determines that the latest firmware exists, determines whether postponement of a firmware update is needed, based on a setting on a timer function that controls the air conditioning apparatus in accordance with a predetermined schedule; and a decision section that, when the second determination section determines that postponement of the firmware update is needed, decides on, from among a plurality of candidates, a postponement time that sets how long the firmware update is postponed.

With such a configuration, the communication device can postpone a timing of updating firmware as necessary. Accordingly, the communication device can update the firmware at an appropriate timing. Moreover, the communication device can prioritize running a timer function while preventing a timing of running the timer function from colliding with the timing of updating the firmware.

(Technology 2) The communication device according to technology 1, including a firmware updating section that updates the firmware when the second determination section determines that postponement of the firmware update is not needed.

With such a configuration, the communication device can determine that postponement of the firmware update is not needed after determining that the latest firmware exists. Accordingly, the communication device can update the firmware immediately after the latest firmware is acquired.

(Technology 3) The communication device according to technology 1 or 2, wherein the decision section decides on the postponement time at random from among the plurality of candidates.

With such a configuration, the communication device does not need to retrieve all timings of running of all timer functions stored in the storage unit. Accordingly, the communication device can reduce the load of processing for deciding the postponement time.

(Technology 4) The communication device according to any one of technologies 1 to 3, wherein the second determination section determines that postponement of the firmware update is needed when the timer function has been completed a first period before a current point of time or when the timer function is scheduled to be run a second period after the current point of time.

With such a configuration, a period for an error signal indicting a failure to run the timer function to be transmitted from the indoor unit and a period for the firmware update to be completed before the timer function is started are secured. Accordingly, the communication device can prevent a series of processes related to each timer function run on the air conditioning apparatus from being interrupted by the firmware updating process.

(Technology 5) The communication device according to any one of technologies 1 to 4, wherein the first determination section determines at predetermined intervals whether the latest firmware exists, and the decision section decides on the postponement time in such a manner that the postponement time is shorter than one interval of the predetermined intervals.

With such a configuration, the decision section can decide on a postponement time that is within a period from when the first determination section determines that the latest firmware exists until the first determination section determines for the next time that the latest firmware exists. Accordingly, the communication device can decide on a postponement time as necessary each time the latest firmware is acquired.

(Technology 6) The communication device according to any one of technologies 1 to 5, wherein when the postponement time is reached, the second determination section determines again whether postponement of the firmware update is needed.

With such a configuration, when the postponement time is reached, it can be determined whether the firmware update is needed. Accordingly, the communication device can prevent a timing of running a timer function from colliding with a timing of updating the firmware when the postponement time is reached.

(Technology 7) The communication device according to technology 6, wherein when the second determination section determines again that postponement of the firmware update is needed, the decision section decides on the postponement time again.

With such a configuration, the decision section can repeat deciding on a postponement time. Accordingly, the communication device can attempt to update the firmware repeatedly until a collision with a timing of running a timer function does not occur.

(Technology 8) The communication device according to technology 7, wherein when the number of times the decision section decides on the postponement time reaches a predetermined number of times, the firmware is not updated until the first determination section determines for a next time that the latest firmware exists.

With such a configuration, a postponement time can be prevented from being decided too many times by limiting the number of times the decision section executes the processing of deciding on a postponement time. Accordingly, the communication device can reduce a processing load related to the firmware updating process.

(Technology 9) An air conditioning system including: the communication device according to any one of technologies 1 to 8; an air conditioning apparatus including the indoor unit, the outdoor unit, and an operating device, the indoor unit being connected to the communication device, the outdoor unit being connected to the indoor unit, the operating device operating the indoor unit; and the management device that manages the outdoor unit and the indoor unit, the management device being connected to the communication device via the communication network.

With such a configuration, the air conditioning system can obtain operations and effects similar to those of the communication device according to any one of technologies 1 to 8.

### [Industrial Applicability]

The present disclosure is applicable to a communication device connected, via a communication network, to a management device that manages an outdoor unit and an indoor unit, as well as to an air conditioning system including: the communication device; an air conditioning apparatus including the outdoor unit and the indoor unit; and the management device. Specifically, the present disclosure is applicable to a communication device that can be connected to a communication network in a wireless or wired manner, a commercial air conditioning system, and a home air conditioning system.

### [Reference Signs List]

- 1: WLAN adapter
- 2: Air conditioning apparatus
- 3: Router
- 4: Communication network
- 5: Server
- 11: Controller
- 12: Storage unit
- 13: Communication unit
- 21: Outdoor unit
- 22: Indoor unit
- 23: Remote operating device
- 111: Control section
- 112: Firmware existence determination section
- 113: Postponement time determination section
- 114: Postponement time decision section
- 115: Firmware updating section
- 131: Wireless section
- 132: Wired section
- ACS: Air conditioning system

## Claims

1. A communication device connected to an air conditioning apparatus including an outdoor unit and an indoor unit, the communication device being configured to be capable of communicating, via a communication network, with a management device that manages the air conditioning apparatus, the communication device comprising:
a first determination section that determines whether latest firmware for the communication device exists;
a second determination section that, when the first determination section determines that the latest firmware exists, determines whether postponement of a firmware update is needed, based on a setting on a timer function that controls the air conditioning apparatus in accordance with a predetermined schedule; and
a decision section that, when the second determination section determines that postponement of the firmware update is needed, decides on, from among a plurality of candidates, a postponement time that sets how long the firmware update is postponed.

2. The communication device according to claim 1, comprising a firmware updating section that updates the firmware when the second determination section determines that postponement of the firmware update is not needed.

3. The communication device according to claim 1, wherein the decision section decides on the postponement time at random from among the plurality of candidates.

4. The communication device according to claim 1, wherein the second determination section determines that postponement of the firmware update is needed when the timer function has been completed a first period before a current point of time or when the timer function is scheduled to be run a second period after the current point of time.

5. The communication device according to claim 1, wherein
the first determination section determines at predetermined intervals whether the latest firmware exists, and
the decision section decides on the postponement time in such a manner that the postponement time is shorter than one interval of the predetermined intervals.

6. The communication device according to claim 1, wherein when the postponement time is reached, the second determination section determines again whether postponement of the firmware update is needed.

7. The communication device according to claim 6, wherein when the second determination section determines again that postponement of the firmware update is needed, the decision section decides on the postponement time again.

8. The communication device according to claim 7, wherein when the number of times the decision section decides on the postponement time reaches a predetermined number of times, the firmware is not updated until the first determination section determines for a next time that the latest firmware exists.

9. An air conditioning system comprising:
the communication device according to any one of claims 1 to 8;
the air conditioning apparatus including the indoor unit, the outdoor unit, and an operating device, the indoor unit being connected to the communication device, the outdoor unit being connected to the indoor unit, the operating device operating the indoor unit; and
the management device that manages the outdoor unit and the indoor unit, the management device being connected to the communication device via the communication network.
